(19) Europäisches Patentamt
European Patent Office
Office européen des brevets

(11) **EP 3 010 221 A1**

(12) **EUROPEAN PATENT APPLICATION**

(43) Date of publication:
**20.04.2016 Bulletin 2016/16**

(51) Int Cl.:
*H04N 1/387* (2006.01)     *H04N 1/00* (2006.01)

(21) Application number: **15189762.6**

(22) Date of filing: **14.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **14.10.2014  JP 2014209633**

(71) Applicant: **Funai Electric Co., Ltd.
Daito City
Osaka Osaka 574-0013 (JP)**

(72) Inventor: **KAMISOYAMA, Shinichi
Osaka, Osaka 574-0013 (JP)**

(74) Representative: **Osha Liang
2, rue de la Paix
75002 Paris (FR)**

(54) **SCANNER AND SCANNING METHOD**

(57)     A scanner apparatus (1) having an image sensor (12) includes a spread position acquisition portion that acquires a center position of a medium (5) placed on a scan area (11); an effective area determination portion that determines an effective area of the scan area (11) occupied by the medium (5) based on the acquired center position; a data acquisition portion that scans the determined effective area by the image sensor (12); and a memory that stores data of the scanned effective area in two pieces split at the center position.

[FIG. 2B]

**Description**

[Technical Field]

The present invention relates generally to a scanner apparatus and scanning method, and more particularly relates to technology that digitizes printed information on a medium such as a book or a magazine by scanning.

[Background Art]

The need for a scanner that can appropriately scan a medium such as a book or a magazine is increasing. For example, Patent Literature 1 discloses a configuration of a scanning device that can reproduce a scanned image of a book, a magazine, or the like not as a split image of individual pages but as one image.

[Citation List]

[Patent Literature]

[Patent Literature 1] Japanese Unexamined Patent Application Publication No. 2013-157775

[Summary of the Invention]

Various size standards exist for a bound medium in a closed state, such as a "Shinsho" size and a "Bunko" size (paperback pocket size). However, in a spread state, a size in a spread direction changes individually due to a binding method, a paper quality, a paper thickness, and the like of the bound medium. Because of this, when scanning the bound medium in the spread state, a slightly larger size needs to be set in the spread direction. In this situation, an acquired scan data comes to include many unnecessary portions, which renders the scan data difficult for a user to view and increases a data amount of the scan data.

In one or more embodiments of the invention, a scanner apparatus is provided that improves readability of the scanned medium and decreases the data size of the scanned medium in a spread state.

A scanner according to one or more embodiments of the invention comprises a spread position acquisition unit that acquires a spread position of a target medium placed in a spread state in a scan area, an effective area determination unit that determines a necessary effective area in the target medium based on the spread position acquired by the spread position acquisition unit, and a data acquisition unit that acquires scan data of the target medium in the effective area determined by the effective area determination unit.

According to this aspect, the spread position acquisition unit may acquire the spread position of the target medium placed in the spread state in the scan area, and the effective area determination unit determines the necessary effective area in the target medium based on the spread position. Moreover, the data acquisition unit acquires the scan data of the target medium in the determined effective area. By this, the scan data is acquired for the effective area determined based on the spread position; therefore, a needless portion is not included in the acquired scan data, scan data that is easy-to-view for a user is obtained, and a data size of the scan data can be kept small.

Furthermore, in the scanner of the above aspect, the effective area determination unit may use size standard information of a bound medium to acquire a vertical size and a horizontal size of the target medium, and use the acquired vertical size and horizontal size to determine the effective area.

According to this configuration, the effective area is determined using the vertical size and the horizontal size of the target medium acquired using the size standard information; therefore, an appropriate effective area can be reliably determined.

Furthermore, in the scanner of the above aspect, the acquired scan data in the effective area may be split into two at a position of a spread centerline of the target medium and respectively saved.

According to this configuration, scan data of one page at a time of the spread pages can be easily acquired in one scanning operation.

Furthermore, in the scanner of the above aspect, a reference index for aligning the position of the spread centerline of the target medium therewith may be provided, or the reference index may be configured to be displayable in the scan area.

According to this configuration, the user can easily align the spread position of the target medium with a predetermined position by referencing the reference index.

Furthermore, the scanner may be of a flatbed type provided with an image sensor, the reference index may be provided on the image sensor, and the image sensor may move to a position that aligns the spread centerline.

According to this configuration, when scanning the target medium in the spread state, the user can easily align the spread position of the target medium with the predetermined position by referencing the reference index provided in the moved image sensor.

Furthermore, in the scanner of the above aspect, the spread position acquisition unit may detect a rectangular region occupied by the target medium in the scan area by image processing, and the effective area determination unit may use coordinate values of four vertices of the rectangular region to estimate the vertical size of the target medium.

By this configuration, the vertical size of the target medium in the spread state can be automatically estimated regardless of where the user places it in the scan area.

Furthermore, in the scanner of the above aspect, the effective area determination unit may detect a concave portion in two long sides of the rectangular region, and detect a line connecting positions of the concave portions as the spread centerline of the target medium.

By this configuration, the position of the spread centerline of the target medium in the spread state can be automatically detected.

In one or more embodiments of the invention, a scanning method that uses an apparatus having a scanning function to scan a target medium of a bound type placed in a spread state in a scan area is provided. According to this method, the apparatus or a computer that can communicate with the apparatus acquires a spread position of the target medium, determines a necessary effective area in the target medium based on the acquired spread position, and acquires scan data of the target medium in the determined effective area.

According to this aspect, the apparatus having the scanning function or the computer connected to the apparatus having the scanning function acquires the spread position of the target medium placed in the spread state and determines the necessary effective area in the target medium based on the acquired spread position. Moreover, the scan data of the target medium in the determined effective area is acquired. By this, the scan data is acquired for the effective area determined based on the spread position; therefore, the needless portion is not included in the acquired scan data, scan data that is easy-to-view for the user is obtained, and the data size of the scan data can be kept small.

A scanner apparatus having an image sensor according to one or more embodiments of the invention comprises: a spread position acquisition portion that acquires a center position of a medium placed on a scan area; an effective area determination portion that determines an effective area of the scan area occupied by the medium based on the acquired center position; a data acquisition portion that scans the determined effective area by the image sensor; and a memory that stores data of the scanned effective area in two pieces split at the center position.

A scanning method executed by an apparatus having an image sensor according to one or more embodiments of the invention comprises: acquiring a center position of a medium placed on a scan area; determining an effective area of the scan area occupied by the medium based on the acquired center position; scanning the determined effective area by the image sensor; splitting data of the scanned effective area into two pieces at the center position; and storing on a memory the two pieces of the data.

According to one or more embodiments of the present invention, scan data is acquired for an effective area determined based on a spread position of a target medium in a spread state; as a result, readability for the scan data may be improved, and the size of the scan data may decrease.

[Brief Description of Drawings]

FIG. 1 shows a schematic flow of a scanning operation using a scanner according to one or more embodiments of the invention.
FIGS. 2A-2C each show an example of the scanning operation according to one or more embodiments of the invention.
FIGS. 3A-3C each show an example of the scanning operation according to one or more embodiments of the invention.
FIG. 4 shows a schematic flow of a scanning operation using a scanner according to one or more embodiments of the invention.
FIGS. 5A-5C each show an example of the scanning operation according to one or more embodiments of the invention.
FIG. 6 shows a functional block diagram of the scanner according to one or more embodiments of the invention.

[Description of Embodiments]

Embodiments of the invention will be described in detail below with reference to the drawings. In the present specification, concerning a bound medium in a spread state, a direction in which a back cover extends is defined as a vertical direction and a spread direction is defined as a horizontal direction. Moreover, concerning the bound medium in a closed state, a size in the vertical direction is referred to as a vertical size and a size in the horizontal direction is referred to as a horizontal size.

(First Example)

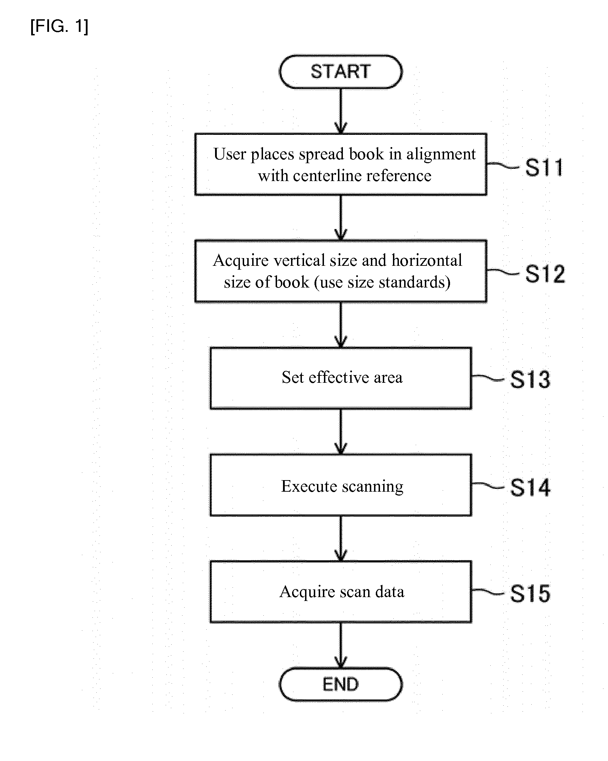

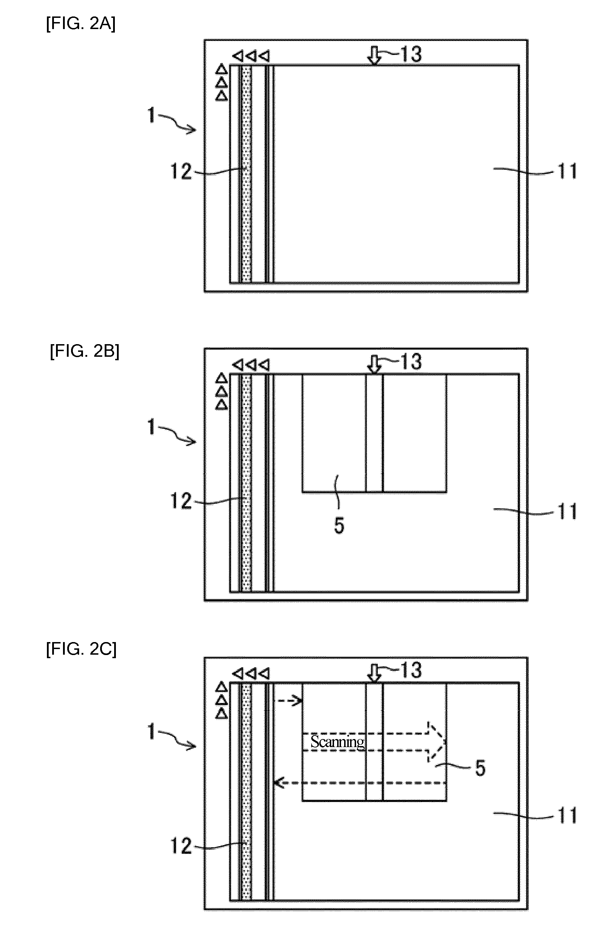

FIG. 1 is a flowchart illustrating a schematic of a scanning operation using a scanner according to one or more embodiments of the invention, and FIG. 2 is a diagram illustrating an example of the scanning operation according to one or more embodiments of the invention. In one or more embodiments of the first example, a book 5 in a spread state is scanned using a scanner 1 of a flatbed type such as is illustrated in FIG. 2. The book 5 is an example of a target medium of a bound type. As illustrated in FIG. 2A, the scanner 1 according to one or more embodiments of the first example comprises a flatbed 11 serving as a scan area and an image sensor 12 for reading data. The image sensor 12 is configured to extend in a main scanning direction (an up-and-down direction in the drawing) and moves in a sub scanning direction (a left-and-right direction in the drawing) in the flatbed 11 when the scanning operation is being performed. When the scanning operation is not being performed, the image sensor 12 is positioned at a left end of the flatbed 11 as a predetermined position. Moreover, while not illustrated, the scanner 1 has an operation input means such as an operation button or a touch panel.

Furthermore, in a border surrounding the flatbed 11, a marking (or marker) 13 as a reference index (or reference guide) for aligning a spread centerline of the book 5 therewith is labeled. In FIG. 2, an example is illustrated where an arrow is labeled as the marking 13 in the border on an upper side of the flatbed 11, but a position and a shape of the marking 13 are not limited thereto. For example, the marking 13 may be labeled in the border on a lower side or on the left or the right of the flatbed 11, and the marking 13 may be a triangle or characters of some sort.

The scanning operation in the first example will be described according to FIG. 1 and FIGS. 2A-2C. First, a user, in a state where the book 5 is spread, faces pages to be scanned toward a flatbed surface and placing them on the flatbed 11. At this time, as illustrated in FIG. 2B, the user presses an upper side of the book 5 in the spread state to the border of the flatbed 11 and aligns an upper end of a centerline of the book 5 (for example, a position in the middle of the back cover) with a position indicated by the marking 13 (S11). By the user placing the book 5 in this manner, the spread pages of the book 5 come to be included precisely in an effective area set as will be described below by the scanner 1. The effective area is an area that the book 5 actually occupies on the scan area of the scanner 1. In other word, the effective area is the minimum area required to scan the book 5 by the scanner 1.

When the book 5 is placed on the flatbed 11 in the spread state, the scanner 1 may acquire a vertical size and a horizontal size of the book 5 (S12). For example, the scanner 1 is configured so a size standard such as a "Shinsho" size or a "Bunko" size (paperback pocket size) can be set and input from the outside. When the user sets and inputs, for example, "Shinsho," the scanner 1 uses size standard information of the Shinsho size to acquire 182 mm as the vertical size and 103 mm as the horizontal size. Other than this, the scanner 1 may be configured so a numerical value of the vertical size of the book 5 can be set and input from the outside. When the user sets and inputs as the vertical size 145 mm for example, the scanner 1 references each type of size standard information to estimate a "Bunko size" and acquires 105 mm as the horizontal size.

Next, the scanner 1 may use the vertical size and the horizontal size of the book 5 acquired at step S12 to set a necessary effective area of the scan area occupied by the book 5 based on a position of the spread centerline of the book 5 (S13). Here, the scanner 1, based on the position indicated by the marking 13, may set as the effective area a range of an extent corresponding to the acquired vertical size in a downward direction in the drawing and a range of an extent corresponding to the acquired horizontal size in the leftward and rightward directions respectively in the drawing. As now illustrated in FIG. 2B, the upper side of the book 5 in the spread state is pressed to the border of the flatbed 11, and the centerline of the book 5 is aligned with the position indicated by the marking 13. Because of this, the spread pages of the book 5 are included precisely in the set effective area.

Next, the scanner 1 may scan the effective area set at step S13 according to, for example, an operation of the user (S14). At this time, as illustrated in FIG. 2C, the image sensor 12 may move from the predetermined position to a left end of the effective area and start scanning therefrom. Then, when scanning is performed to a right end of the effective area, scanning is ended, and the image sensor 12 may return to the left end of the flatbed 11 that is the predetermined position.

Afterward, the scanner 1 may acquire scan data (S15). For example, original data obtained by scanning is split into two pieces at the position of the spread centerline of the book 5 and saved respectively as scan data of two pages, left and right. Alternatively, the original data obtained by scanning may be acquired as-is as scan data of one page.

(Another Operation Example)

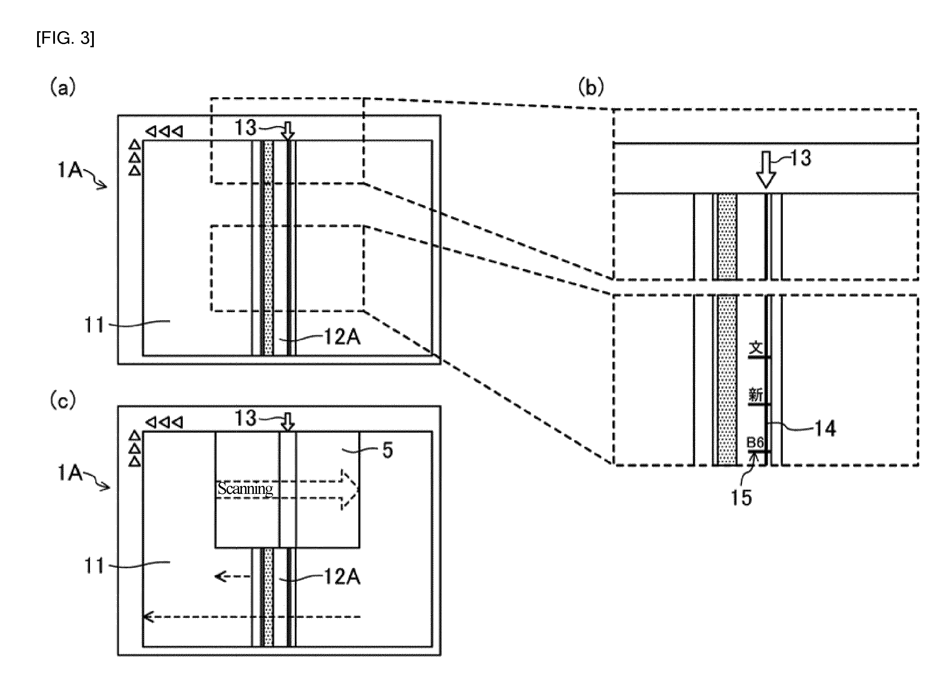

FIGS. 3A-3C are a diagram illustrating another example of the scanning operation according to one or more embodiments of the invention. A scanner 1A illustrated in FIGS. 3A-3C, similarly to the scanner 1 illustrated in FIGS. 2A-2C, may comprise the flatbed 11 serving as the scan area and an image sensor 12A for reading the data and is labeled with the marking 13 in the border surrounding the flatbed 11. Moreover, as illustrated in the enlarged view that is FIG. 3B, the image sensor 12A is labeled with a positioning line 14 as a reference index for aligning the centerline of the book 5 in the spread state therewith. Moreover, this positioning line 14 is labeled with a scale 15 for determining a size standard of the book 5; in the example of FIG. 3B, characters such as "文" (Bunko size), "新" (Shisho size), and "B6" are indicated. The positioning line 14 and the scale 15 are formed in shapes and materials not in conflict with an optical design.

Furthermore, the scanner 1A is configured to be able to be set to a spread book scan execution mode from the outside; when set to the spread book scan execution mode, as illustrated in FIGS. 3A-3C, the image sensor 12A moves to a position aligned with the spread centerline of the book 5, which here is a central portion of the flatbed 11.

The other example of the scanning operation according to the present embodiment will be described according to FIG. 1 and FIGS. 3A-3C. First, the user sets the scanner 1A to the spread book scan execution mode. At this time, the image sensor 12A may move to the central portion of the flatbed 11. The user places the book 5 on the flatbed 11 in the spread state facing downward. Then, the upper side of the book 5 in the spread state is pressed to the border of the flatbed 11, and the centerline of the book 5 is aligned with the positioning line 14 of the image sensor 12A (S11).

When the book 5 is placed on the flatbed 11 in the spread state, the scanner 1A may acquire the vertical size and the horizontal size of the book 5 (S12). The user may refer to the scale 15 of the image sensor 12A to set and input the size standard to the scanner 1A. The scanner 1A may use the information about the input size standard to acquire the vertical size and the horizontal size. Alternatively, for example, the image sensor 12A may be labeled with markings indicating dimensions from the upper border of the flatbed 11. When the user refers to the markings of the image scanner 12A to set and input the vertical size to the scanner 1A, the scanner 1 refers to the various types of size standard information and acquires the horizontal size.

Subsequently, similarly to the operation example above, the scanner 1A may set the effective area (S13), scan the set effective area (S14), and generate and save the scan data (S15). As illustrated in FIG. 3C, when scanning, the image sensor 12A may move from the center of the flatbed 11 to the left end of the effective area and start scanning therefrom. Then, when scanning is performed to the right end of the effective area, scanning is ended, and the image sensor 12 may return to the left end of the flatbed 11 that is the predetermined position.

As above, according to the present example, the scanners 1, 1A may comprise the marking 13 and the positioning line 14 for aligning the position of the spread centerline of the book 5 therewith. When the user places the book 5 in the spread state on the flatbed 11, the scanners 1, 1A set the effective area based on a spread position (or center position) of the book 5 and acquire the scan data in the effective area. That is, the scan data is acquired for the effective area determined based on the spread position; therefore, waste is eliminated in the acquired scan data, scan data that is easy-to-view for the user is obtained, and the data size of the scan data can be kept small.

Furthermore, in the present example, the scanners 1, 1A may acquire the vertical size and the horizontal size of the book 5 using the size standard information and use the acquired vertical size and horizontal size to determine the effective area based on the position of the spread centerline of the book 5. By this, an appropriate effective area can be reliably determined.

In the above example, the marking 13 labeled in the border of the flatbed 11 and the positioning line 14 of the image sensor 12A may be used as the reference index for aligning the spread centerline of the book 5 therewith, but the example is not limited thereto. Alternatively, for example, in the spread book scan execution mode, when placing the book 5, a line or a point may be indicated by irradiating a laser light to a flatbed 11 side from the image sensor 12A. That is, the scanner according to the present example may comprise the reference index for aligning the spread centerline of the book or the like therewith or configure the reference index for aligning the spread centerline of the book or the like therewith to be displayable in a scan area.

(Second Example)

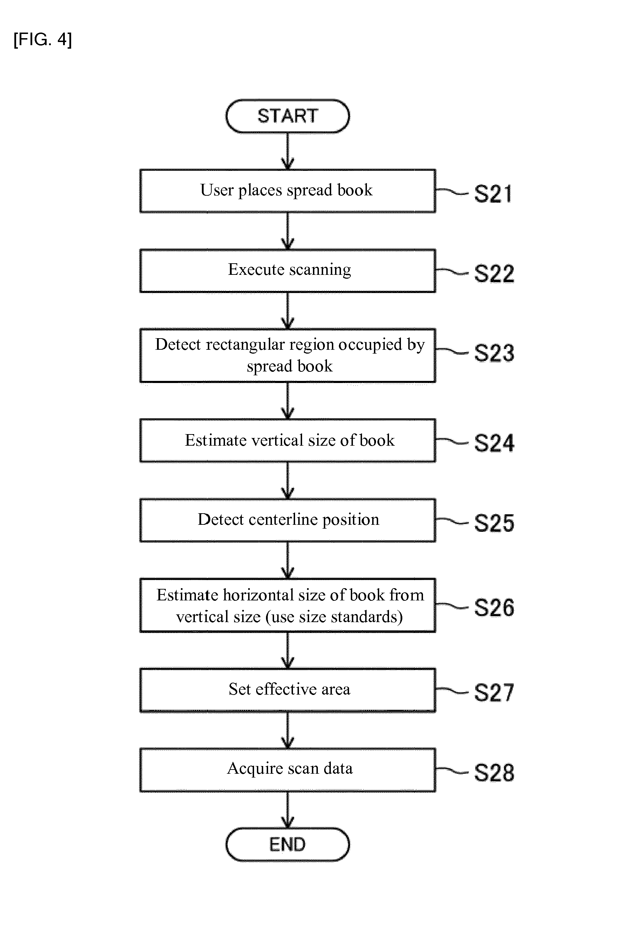

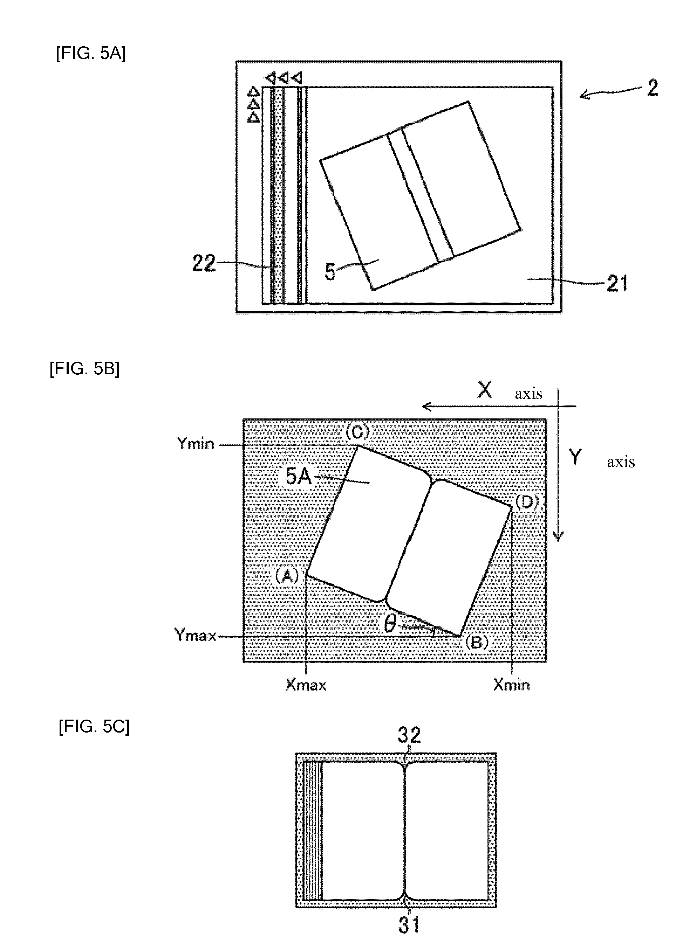

FIG. 4 is a flowchart illustrating a schematic of a scanning operation using a scanner according to one or more embodiments of the invention, and FIG. 5 is a diagram illustrating an example of the scanning operation according to one or more embodiments of the invention. In one or more embodiments of the second example, similarly to the embodiments of the first example, the book 5 in the spread state may be scanned using a scanner 2 of the flatbed type such as is illustrated in FIGS. 5A-5C. As illustrated in FIG. 5A, the scanner 2 according to the present example may comprise a flatbed 21 serving as the scan area and an image sensor 22 for reading the data.

The scanning operation in the present example will be described according to FIG. 4 and FIGS. 5A-5C. First, the user places the book 5 on the flatbed 21 in the spread state facing downward (S21). At this time, as illustrated in FIG. 5A, the book 5 may be placed in any position on the flatbed 21.

Next, the scanner 2 may scan according to, for example, the operation of the user (S22). Scanning here may be performed for an entire region of the flatbed 21 since it is not known in which position on the flatbed 21 the book 5 is placed. At this time, a cover of the flatbed 21 may be left open. This is because, as will be described below, a rectangular region occupied by the book 5 in the spread state needs to be detected by an imaging process, and leaving the cover open can generate a large brightness difference in an image between a region in which the book 5 is placed and the remaining region.

The following processing may be automatically performed by the scanner 2. First, the scanner 2 may detect the rectangular region occupied by the book 5 in the spread state on the flatbed 21 by the imaging process from original data acquired at step S22 (S23). For example, as illustrated in FIG. 5B, in the original data, a range where a brightness level is not shared with an outer frame region is detected as a rectangular region 5A occupied by the book 5. For the rectangular region 5A, coordinates of the following four vertices (A) to (D) are sought.

(A): (Xmax, y1)
(B): (x1, Ymax)
(C): (x2, Ymin)
(D): (Xmin, y2)

Xmin, Xmax are respectively the minimum value and the maximum value of an X coordinate of the rectangular region 5A; Ymin, Ymax are respectively the minimum value and the maximum value of a Y coordinate of the rectangular region 5A; and x1, x2, y1, y2 are arbitrary. From the coordinates of these vertices (A) to (D), the position in which the book 5 in the spread state is placed and an inclination (rotation angle θ) can be grasped. For example, subsequent image processing may be performed upon correcting an inclination of image data including the rectangular region 5A using the grasped rotation angle θ.

Then, the scanner 2 may estimate the vertical size of the book 5 from the coordinates of the four vertices (A) to (D) (S24). The vertical size is estimated by a computation such as follows.

$$\text{Vertical size} = \min(\alpha, \beta)$$

min: computation that selects minimum value
$\alpha$ = (distance between (A) and (C) + distance between (B) and (D)) /2
$\beta$ = (distance between (A) and (B) + distance between (C) and (D)) /2

By such as method, the vertical size of the book 5 in the spread state can be automatically estimated regardless of where the book 5 in the spread state is placed on the flatbed 21. With a bound medium, a vertical size thereof fundamentally does not change even when placed in a spread state. Because of this, the vertical size can be estimated with favorable precision by image processing such as above.

Furthermore, the scanner 2 may use the image data including the rectangular region 5A to detect the position of the spread centerline of the book 5 (S25). For example, as illustrated in FIG. 5C, when an image of the rectangular region 5A is cut out together with a periphery thereof, concave portions 31, 32 of, for example, a fan shape, appear on a long side. These concave portions 31, 32 arise due to a spread portion of the book 5 floating from a surface of the flatbed 21. Therefore, it is favorable to detect positions of the concave portions 31, 32 (for example, positions of bases of the fans) and estimate a line connecting these positions as the centerline of the book 5. At this time, erroneous detection can be prevented by confirming that the estimated centerline is parallel to a short side of the rectangular region 5A. Alternatively, a line equidistant from the two short sides of the rectangular region 5A may be detected as the centerline of the book 5. By such a method, the position of the spread centerline of the book 5 can be automatically detected.

Furthermore, the scanner 2 may estimate the horizontal size of the book 5 by referring to the various types of size standard information based on the vertical size estimated at step S24 (S26).

Then, the scanner 2 may use the vertical size of the book 5 estimated at step S24 and the horizontal size of the book 5 estimated at step S26 to set the necessary effective area in the book 5 based on the position of the spread centerline of the book 5 detected at step S25 (S27). That is, in the rectangular region 5A, the ranges of the extent corresponding to the acquired horizontal size are respectively set as the effective area in the horizontal direction based on the position of the centerline.

Then, the scanner 2 may acquire the scan data (S28). For example, the data in the effective area set at step S27 is cut out from the original data obtained at step 22. Then, this data is split into two at the position of the spread centerline of the book 5 and saved respectively as the scan data of two pages, left and right. Alternatively, the data cut out from the effective area may be acquired as-is as the scan data of one page.

As above, according to the present example, when the user places the book 5 on the flatbed 21 in the spread state, the scanner 2 may detect the rectangular region 5A occupied by the book 5 by image processing and set the effective area based on the position of this rectangular region 5A. Moreover, the scan data in the effective area may be acquired. Because of this, the scan data may be acquired for the effective area determined based on the spread position; therefore, waste is eliminated in the acquired scan data, the scan data that is easy-to-view for the user is obtained, and the data size of the scan data can be kept small. Moreover, in the present example, the user has only to place the book 5 on the flatbed 21 and perform a scan execution operation.

Furthermore, the scanner 2 may estimate the vertical size of the book 5 from the detected rectangular region 5A and acquires the horizontal size of the book 5 using the size standard information. Moreover, the position of the spread centerline of the book 5 may be detected from the rectangular region 5A. Moreover, the acquired vertical size and horizontal size may be used to set the effective area based on the position of the spread centerline of the book 5. By this, the appropriate effective area can be reliably determined.

In the present example, the scan data of the set effective area is acquired after the entire region of the flatbed 21 is scanned, but this effective area may be scanned, for example, after first detecting the rectangular region 5A occupied by the book 5 and setting the effective area.

(Other Examples)

In one or more embodiments of the first example, the user sets the position of the book 5 in alignment with the reference index and inputs the information relating to the vertical size, and in one or more embodiments of the second example, the scanner automatically detects the vertical size and the centerline position of the book 5; however, these may be executed in combination. For example, in the other operation according to one or more embodiment of the first example, the vertical size of the book 5 may be automatically detected by the image sensor 12A. Alternatively, in one or more embodiments of the second example, the user may input the information relating to the vertical size of the book 5 to the scanner 2.

Furthermore, in each example above, the effective area does not need to be set in precise alignment with the acquired vertical size and horizontal size and may be set, for example, with somewhat of a margin.

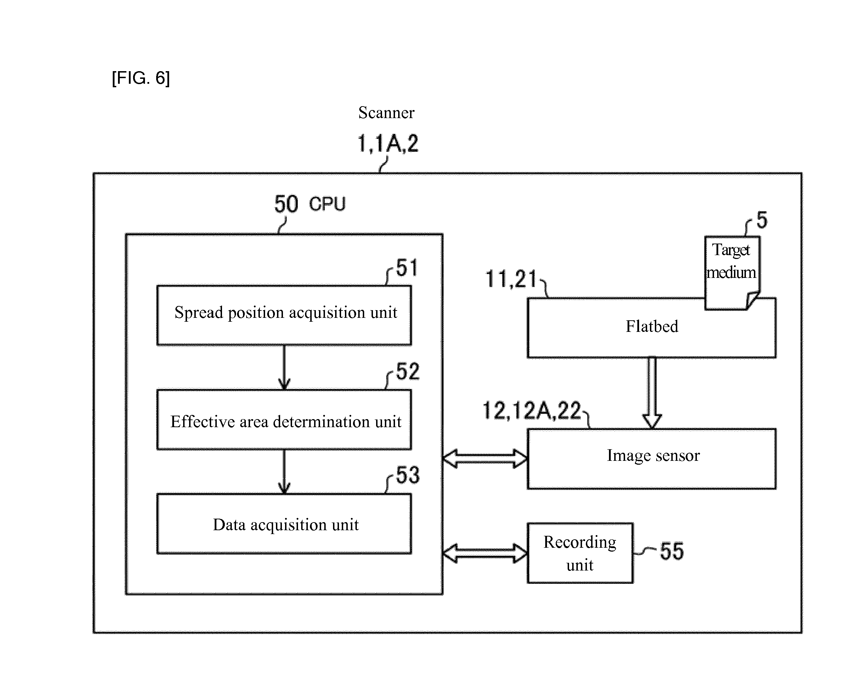

FIG. 6 is a functional block diagram of the scanner according to one or more embodiments of the invention. As illustrated in FIG. 6, the scanners 1, 1A, 2 may comprise the flatbeds 11,21; the image sensors 12, 12A, 22; a CPU (or processor) 50; and a recording unit (or memory) 55. The CPU 50 may function as a spread position acquisition unit 51, an effective area determination unit 52, and a data acquisition unit 53 by, for example, executing a predetermined program. The spread position acquisition unit 51 may acquire the spread position of the target medium 5 placed on the flatbeds 11, 21 in the spread state. The effective area determination unit 52 may determine the necessary effective area in the target medium 5 based on the spread position acquired by the spread position acquisition unit 51. The data acquisition unit 53 may acquire the scan data of the target medium 5 in the effective area determined by the effective area determination unit 52.

In one or more embodiments of the first example, the spread position acquisition unit 51 may acquire the position indicated by the reference index labeled on the scanner 1 as the spread position; the effective area determination unit 52 may execute steps S12, S13; and the data acquisition unit 53 may execute steps S14, S15. In one or more embodiments of the second example, the spread position acquisition unit 51 may execute step S23; the effective area determination unit 52 may execute steps S24 to S27; and the data acquisition unit 53 may execute steps S22, S28. Moreover, the recording unit 55 may record or store the scan data in the effective area. For example, the scan data of two pages, left and right, split into two at the position of the spread centerline of the target medium 5 may be stored respectively in the recording unit 55.

Furthermore, in each example above, the scanning operation may be performed by the scanner alone, but alternatively, a scanning operation such as above may be performed using, for example, a scanner connected to a PC or the like. In this situation, the operation input, image processing, and the like described in each embodiment may be executed by the scanner or executed by the PC or the like.

Furthermore, in each example above, description is given with the scanner of the flatbed type as the example, but a scanning operation such as above may be performed using a scanner of another type. For example, an overhead scanner may be used. In this situation, for example, in one or more embodiments of the first example, as the reference index for aligning the position of the spread centerline of the book therewith, a line, a point, or the like may be indicated in the scan area by a laser light from a scanner main body.

Alternatively, a mobile terminal mounted with a camera or the like may be used as the scanner. In this situation, for example, in one or more embodiments of the second example, there is a possibility that the rectangular region occupied by the book 5 will deform into a trapezoid in the image due to an inclination of the mobile terminal relative to the scan area. Because of this, it is favorable to perform processing such as above upon performing image processing that deforms this trapezoidal region into a rectangle.

That is, the scan method described in each example above can be executed by an apparatus having a scan function or a computer that can communicate with the apparatus having the scan function.

Furthermore, in each example above, description is given as scanning the book 5, but a book is but an example of a bound medium; the aforementioned examples are also applicable to scanning another bound medium, such as a magazine, a note, a pamphlet, or the like. Moreover, other than this, the aforementioned examples are applicable to scanning a document enclosed in a binder or the like.

[Industrial Applicability]

A scanner apparatus and scanning method according to one or more embodiments of the invention is useful in improving an ease-of-viewing of scan data and suppressing a data size in a scanner that scans a medium in a spread state.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

[Reference Signs List]

1, 1A, 2 Scanner (scanner apparatus)
5 Book (target medium)
5A Rectangular region
11, 21 Flatbed (scan area)
12, 12A, 22 Image sensor
13 Marking (reference index or reference guide)
14 Positioning line (reference index)
31, 32 Concave portion
51 Spread position acquisition unit (Spread position acquisition portion)
52 Effective area determination unit (Effective area determination portion)
53 Data acquisition unit (Data acquisition portion)
55 Recording unit (memory)

**Claims**

1. A scanner apparatus (1, 1A, 2) having an image sensor (12, 12A, 22), comprising:

   a spread position acquisition portion (51) that acquires a center position of a medium (5) placed on a scan area (11, 21);
   an effective area determination portion (52) that determines an effective area of the scan area (11, 21) occupied by the medium (5) based on the acquired center position;
   a data acquisition portion (53) that scans the determined effective area by the image sensor (12, 12A, 22); and
   a memory (55) that stores data of the scanned effective area in two pieces split at the center position.

2. The scanner apparatus according to claim 1, wherein the effective area determination portion (52)

   acquires size standard information representing a vertical and a horizontal size of the medium (5), and
   determines the effective area based on the size standard information.

3. The scanner apparatus according to claim 1 or 2, wherein
   the scan area displays a reference guide (13, 14) for the center position.

4. The scanner apparatus according to claim 3, wherein
   the scanner apparatus (1A) is a flatbed scanner,
   the image sensor (12A) indicates the reference guide (14), and
   the image sensor (12A) moves to a position aligned with the center position of the medium (5).

5. The scanner apparatus according to any of claims 1 to 4, wherein
   the data acquisition portion (53) scans the scan area with the image sensor (12, 12A, 22),
   the spread position acquisition portion (51) detects a rectangular region (5A) occupied by the medium (5) on the scan area (11, 21), and
   the effective area determination portion (52) acquires coordinates of four vertices (A, B, C, D) for the rectangular region, and determines the effective area based on the coordinates.

6. The scanner apparatus according to claim 5, wherein the effective area determination portion (52)

   detects concave portions (31, 32) along two long sides of the rectangular region (5A), and
   recognizes a line connecting the concave portions (31, 32) as the center position of the medium (5).

7. The scanner apparatus according to any of claims 2 to 6, wherein
   the effective area determination portion (52) estimates a horizontal size of the medium (5) based on the size standard information and a vertical size inputted by a user.

8. A scanning method executed by an apparatus (1, 1A, 2) having an image sensor (12, 12A, 22), comprising:

   acquiring a center position of a medium (5) placed on a scan area (11, 21);
   determining an effective area of the scan area (11, 21) occupied by the medium (5) based on the acquired center position;
   scanning the determined effective area by the image sensor (12, 12A, 22);
   splitting data of the scanned effective area into two pieces at the center position; and
   storing on a memory (55) the two pieces of the data.

9. The scanning method according to claim 8, further comprising:

   acquiring size standard information representing a vertical and a horizontal size of the medium (5); and
   determining the effective area based on the size standard information.

10. The scanning method according to claim 9, wherein
    the scan area displays a reference guide (13, 14) for the center position.

11. The scanning method according to claim 10, wherein
    the apparatus (1A) is a flatbed scanner,
    the image sensor (12A) indicates the reference guide (14), and
    the image sensor (12A) moves to a position aligned with the center position of the medium (5).

12. The scanning method according to any of claims 8 to 11, further comprising:

    scanning the scan area (11, 21);
    detecting a rectangular region occupied by the medium (5) on the scan area (11, 21);
    acquiring coordinates of four vertices (A, B, C, D) for the rectangular region; and
    determining the effective area based on the coordinates.

13. The scanning method according to claim 12, further comprising:

detecting concave portions (31, 32) along two long sides of the rectangular region (5A); and recognizing a line connecting the concave portions (31, 32) as the center position of the medium (5).

**14.** The scanning method according to claim any of claims 9 to 13, further comprising:

estimating a horizontal size of the medium (5) based on the size standard information and a vertical size inputted by a user.

[FIG. 1]

```
              ┌─────────────┐
              │    START    │
              └──────┬──────┘
                     │
                     ▼
       ┌───────────────────────────────┐
       │ User places spread book in    │ ~S11
       │ alignment with centerline     │
       │ reference                     │
       └───────────────┬───────────────┘
                       │
                       ▼
       ┌───────────────────────────────┐
       │ Acquire vertical size and     │ ~S12
       │ horizontal size of book       │
       │ (use size standards)          │
       └───────────────┬───────────────┘
                       │
                       ▼
       ┌───────────────────────────────┐
       │       Set effective area      │ ~S13
       └───────────────┬───────────────┘
                       │
                       ▼
       ┌───────────────────────────────┐
       │       Execute scanning        │ ~S14
       └───────────────┬───────────────┘
                       │
                       ▼
       ┌───────────────────────────────┐
       │       Acquire scan data       │ ~S15
       └───────────────┬───────────────┘
                       │
                       ▼
              ┌─────────────┐
              │     END     │
              └─────────────┘
```

[FIG. 2A]

[FIG. 2B]

[FIG. 2C]

Scanning

[FIG. 3]

(a)

(b)

1A

11

13

12A

(c)

1A

13

5

Scanning

11

12A

文

新

B6

14

15

EP 3 010 221 A1

[FIG. 4]

START

User places spread book — S21

Execute scanning — S22

Detect rectangular region occupied by spread book — S23

Estimate vertical size of book — S24

Detect centerline position — S25

Estimate horizontal size of book from vertical size (use size standards) — S26

Set effective area — S27

Acquire scan data — S28

END

[FIG. 5A]

[FIG. 5B]

[FIG. 5C]

[FIG. 6]

Scanner

**1,1A,2**

**50** CPU

**51**

Spread position acquisition unit

**52**

Effective area determination unit

**53**

Data acquisition unit

**5**

Target medium

**11,21**

Flatbed

**12,12A,22**

Image sensor

Recording unit **55**

EP 3 010 221 A1

Europäisches
Patentamt

European
Patent Office

Office européen
des brevets

## EUROPEAN SEARCH REPORT

Application Number

EP 15 18 9762

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 476 964 A2 (XEROX CORP [US]) 25 March 1992 (1992-03-25) | 1-3, 7-10,14 | INV. H04N1/387 H04N1/00 |
| Y | * column 5, line 53 - column 13, line 13 * | 4-6, 11-13 | |
| Y | JP S59 75759 A (NIPPON ELECTRIC CO) 28 April 1984 (1984-04-28) * abstract * | 4,11 | |
| Y | US 2009/141312 A1 (LEE SEUNG-YUP [KR]) 4 June 2009 (2009-06-04) * paragraphs [0040] - [0081] * | 5,6,12, 13 | |
| Y | EP 2 747 403 A2 (SAMSUNG ELECTRONICS CO LTD [KR]) 25 June 2014 (2014-06-25) * paragraphs [0059] - [0136] * | 5,6,12, 13 | |

TECHNICAL FIELDS
SEARCHED      (IPC)

H04N

The present search report has been drawn up for all claims

| Place of search | Date of completion of the search | Examiner |
|---|---|---|
| The Hague | 2 March 2016 | Hardell, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.                    EP 15 18 9762

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2016

| Patent document cited in search report | | Publication date | Patent family member(s) | | Publication date |
|---|---|---|---|---|---|
| EP 0476964 | A2 | 25-03-1992 | CA | 2048147 A1 | 18-03-1992 |
| | | | DE | 69125440 D1 | 07-05-1997 |
| | | | DE | 69125440 T2 | 28-08-1997 |
| | | | EP | 0476964 A2 | 25-03-1992 |
| | | | JP | H04313951 A | 05-11-1992 |
| | | | US | 5212568 A | 18-05-1993 |
| JP S5975759 | A | 28-04-1984 | NONE | | |
| US 2009141312 | A1 | 04-06-2009 | KR | 20090057826 A | 08-06-2009 |
| | | | US | 2009141312 A1 | 04-06-2009 |
| EP 2747403 | A2 | 25-06-2014 | CN | 103905689 A | 02-07-2014 |
| | | | EP | 2747403 A2 | 25-06-2014 |
| | | | KR | 20140082428 A | 02-07-2014 |
| | | | US | 2014177004 A1 | 26-06-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013157775 A